# EUROPEAN PATENT APPLICATION

(11) **EP 4 692 162 A1**
(43) Date of publication of application: **11.02.2026**
(21) Application number: 24780785.2
(22) Date of filing: 29.03.2024
(51) Int. Cl.: C08G 63/66

(54) **POLYMERIZABLE COMPOSITION, COPOLYMER, METHOD FOR PRODUCING COPOLYMER, AND KIT FOR PRODUCING COPOLYMER**

(30) Priority: 30.03.2023 JP 2023054494
(71) Applicant: Maruzen Petrochemical Co., Ltd., Tokyo 104-8502 (JP)
(72) Inventor: SUGIHARA, Shinji, Fukui-shi, Fukui 910-8507 (JP); SUGIYAMA, Masaki, Ichihara-shi, Chiba 290-8503 (JP)
(74) Representative: Wächtershäuser & Hartz Patentanwaltspartnerschaft mbB
(86) International application number: PCT/JP2024/013001
(87) International publication number: WO 2024/204690

(57) **Abstract**

To provide a new technique capable of easily producing a temperature-responsive polymer, a hydrophilic polymer, and a hydrophobic polymer separately.

A polymerizable composition containing the following monomers (A-1) and (B-1).
(A-1) Monomer represented by Formula (1-1) below.
(B-1) Monomer represented by Formula (2-1) below. 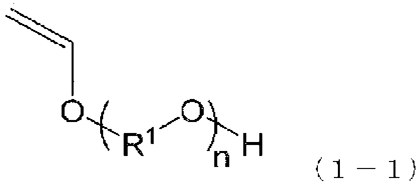 [In Formula (1-1),
R¹ represents an alkanediyl group having 1 to 5 carbon atoms, and
n represents an integer of 1 to 10.] 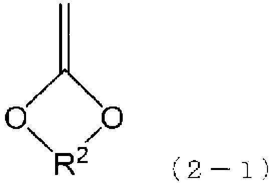 [In Formula (2-1), R² represents a linear alkanediyl group having 1 to 5 carbon atoms.]

## Description

### Technical Field

The present invention relates to a polymerizable composition, a copolymer, a method for producing the copolymer, and a kit for producing the copolymer.

### Background Art

A polymer exhibiting a phase transition phenomenon in response to heat is referred to as a temperature-responsive polymer, and is expected to be used for drug carriers, wound dressings, artificial muscles, microcapsules, biomachines, biosensors, and separation membranes, for example.

As such a temperature-responsive polymer, for example, a random copolymer prepared by polymerizing vinyl acetate together with 2-hydroxyethyl vinyl ether or diethylene glycol monovinyl ether is known (Patent Literature 1).

Meanwhile, as functional vinyl ether derivatives, ethyl vinyl ether and tetraethylene glycol methyl vinyl ether are known, and copolymers prepared by polymerizing 2-methylene-1,3-dioxepane together with these have been reported (Non-Patent Literature 1).

### Citation List

### Patent Literature

Patent Literature 1: JP 2016-210888 A

### Non-Patent Literature

Non-Patent Literature 1: Angew. Chem. Int. Ed. 2017, 56, p16515-16520

### Summary of Invention

### Technical Problem

The present inventors have investigated the combination of tetraethylene glycol methyl vinyl ether and 2-methylene-1,3-dioxepane described in Non-Patent Literature 1. In both cases where the molar ratio of the charged amounts of tetraethylene glycol methyl vinyl ether and 2-methylene-1,3-dioxepane was set to 1:4 and 4:1, the resulting copolymer was a hydrophobic copolymer, and even when the molar ratio was greatly changed as described above, a copolymer exhibiting temperature responsiveness was not prepared.

Meanwhile, in additives used as cosmetic additives, weather-resistant paints, and emulsifiers for emulsion polymerization, it was sometimes necessary to use a hydrophilic polymer or a hydrophobic polymer that acts as a surfactant, rather than a temperature-responsive polymer.

Therefore, the present inventors have attempted to separately produce three types of polymers having different properties, namely a temperature-responsive polymer, a hydrophilic polymer, and a hydrophobic polymer, simply by changing the molar ratio between a combination of two types of monomers. However, in a case where there is a difference between the polymerizability of a vinyl ether monomer and the polymerizability of a monomer to be copolymerized with the vinyl ether monomer, or in a case where there is a difference between the degrees of the hydrophilicity and hydrophobicity of these two types of monomers, even if the molar ratio of the two types of monomers is changed, temperature responsiveness may not be acquired in the first place (For example, Patent Literature 1), and it has been difficult to separately produce the three types of polymers.

An object of the present is to provide a new technique capable of easily separately producing a temperature-responsive polymer, a hydrophilic polymer, and a hydrophobic polymer.

### Solution to Problem

As a result of intensive studies, the present inventors have found that, although temperature responsiveness may not be acquired when a specific vinyl ether-based monomer containing a hydroxy group and a specific cyclic monomer are each formed into a homopolymer, a temperature-responsive polymer, a hydrophilic polymer, and a hydrophobic polymer can be easily separately produced using a combination of these two monomers, and consequently have completed the present invention.

That is, the present invention provides the following <1> to <8>.
<1> A polymerizable composition (hereinafter, also referred to as "polymerizable composition of the present invention") containing the following monomers (A-1) and (B-1).
   (A-1) Monomer represented by Formula (1-1) (hereinafter, also referred to as "monomer (1-1)")
   (B-1) Monomer represented by Formula (2-1) (hereinafter, also referred to as "monomer (2-1)")

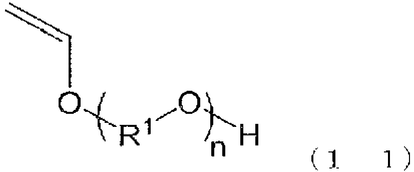

      [In Formula (1-1),
      R¹ represents an alkanediyl group having 1 to 5 carbon atoms, and
      n represents an integer of 1 to 10.]

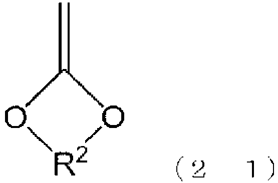

      [In Formula (2-1), R² represents a linear alkanediyl group having 1 to 5 carbon atoms.]
<2> The polymerizable composition according to <1>, in which the monomer (2-1) is 2-methylene-1,3-dioxepane.
<3> The polymerizable composition according to <1> or <2>, in which R¹ is an alkanediyl group having 2 or 3 carbon atoms, and n is an integer of 1 to 4.
<4> The polymerizable composition according to <3>, in which n is 1.
<5> A copolymer (hereinafter, also referred to as "copolymer of the present invention") having the following structural units (A-2) and (B-2).
   (A-2) Structural unit represented by Formula (1-2) (hereinafter, also referred to as "structural unit (2-1)")
   (B-2) Structural unit represented by Formula (2-2) (hereinafter, also referred to as "structural unit (2-2)")

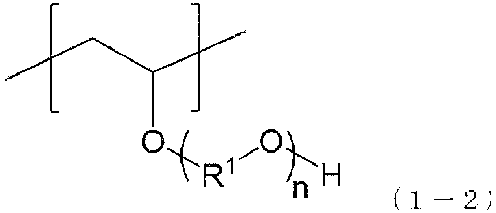

      [In Formula (1-2),
      R¹ represents an alkanediyl group having 1 to 5 carbon atoms, and
      n represents an integer of 1 to 10.]

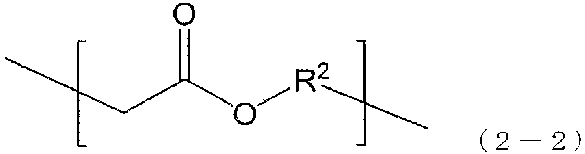

      [In Formula (2-2), R² represents a linear alkanediyl group having 1 to 5 carbon atoms.]
<6> A method for producing a copolymer, the method including a polymerization process of polymerizing the following monomer (A-1) and the following monomer (B-1) (hereinafter, also referred to as "method for producing of the present invention").
   (A-1) Monomer (1-1)
   (B-1) Monomer (2-1)
<7> A kit for producing a copolymer, the kit including the following polymerizable compositions (α-1), (β-1), and (γ-1), in which n is 1.
   (α-1) A polymerizable composition containing a monomer (1-1), in an amount of more than 58 mol parts and less than 100 mol parts relative to a total of 100 mol parts of the monomer (1-1) and the monomer (2-1), and a monomer (2-1), in an amount of more than 0 mol parts and less than 42 mol parts relative to a total of 100 mol parts of the monomer (1-1) and the monomer (2-1)
   (β-1) A polymerizable composition containing a monomer (1-1), in an amount of 43 mol parts or more and 58 mol parts or less relative to a total of 100 mol parts of the monomer (1-1) and the monomer (2-1), and a monomer (2-1), in an amount of 42 mol parts or more and 57 mol parts or less relative to a total of 100 mol parts of the monomer (1-1) and the monomer (2-1)
   (γ-1) A polymerizable composition containing a monomer (1-1), in an amount of more than 0 mol parts and less than 43 mol parts relative to a total of 100 mol parts of the monomer (1-1) and the monomer (2-1), and a monomer (2-1), in an amount of more than 57 mol parts and less than 100 mol parts relative to a total of 100 mol parts of the monomer (1-1) and the monomer (2-1)
<8> A kit for producing a copolymer, the kit including the following polymerizable compositions (α-2), (β-2) and (γ-2), in which n is 2 (the kit described in <7> and the kit described in <8> are collectively referred to as the kit of the present invention).
   (α-2) A polymerizable composition containing a monomer (1-1), in an amount of more than 43 mol parts and less than 100 mol parts relative to a total of 100 mol parts of the monomer (1-1) and the monomer (2-1), and a monomer (2-1), in an amount of more than 0 mol parts and less than 57 mol parts relative to a total of 100 mol parts of the monomer (1-1) and the monomer (2-1)
   (β-2) A polymerizable composition containing a monomer (1-1), in an amount of 28 mol parts or more and 43 mol parts or less relative to a total of 100 mol parts of the monomer (1-1) and the monomer (2-1), and a monomer (2-1), in an amount of 57 mol parts or more and 72 mol parts or less relative to a total of 100 mol parts of the monomer (1-1) and the monomer (2-1)
   (γ-2) A polymerizable composition containing a monomer (1-1), in an amount of more than 0 mol parts and less than 28 mol parts relative to a total of 100 mol parts of the monomer (1-1) and the monomer (2-1), and a monomer (2-1), in an amount of more than 72 mol parts and less than 100 mol parts relative to a total of 100 mol parts of the monomer (1-1) and the monomer (2-1)

### Advantageous Effects of Invention

According to the present invention, a temperature-responsive polymer, a hydrophilic polymer, and a hydrophobic polymer can be easily separately produced. In addition, each of the separately produced polymers has low cytotoxicity and has alkali decomposability.

### Brief Description of Drawings

Fig. 1 is a view illustrating a ¹H NMR spectrum of a copolymer (HEVE/MDO=5.00/5.00) obtained in Example 1.
Fig. 2 is a view illustrating alkali decomposability of a copolymer (HEVE/MDO=7.00/3.00) obtained in Example 1.

### Description of Embodiments

### [Polymerizable Composition]

A polymerizable composition of the present invention contains the following monomers (A-1) and (B-1).
(A-1) Monomer represented by Formula (1-1) below.
(B-1) Monomer represented by Formula (2-1) below.

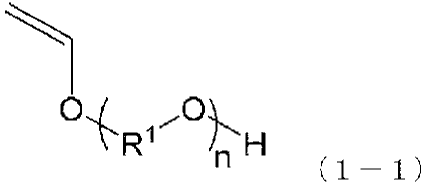

   [In Formula (1-1),
   R¹ represents an alkanediyl group having 1 to 5 carbon atoms, and
   n represents an integer of 1 to 10.]

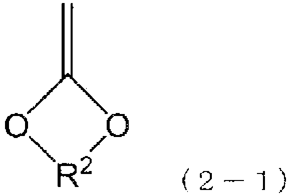

   [In Formula (2-1), R² represents a linear alkanediyl group having 1 to 5 carbon atoms.]

### (Monomer (A-1))

The monomer (A-1) is a hydroxy group-containing monomer represented by Formula (1-1) above. The monomer (A-1) has hydrophilicity.

In Formula (1-1), R¹ represents an alkanediyl group having 1 to 5 carbon atoms.

The alkanediyl group represented by R¹ may be linear or branched. The number of carbon atoms of the alkanediyl group represented by R¹ is preferably 1 to 4, and more preferably 2 or 3 from the viewpoint of enhancing the desired effect of the present invention.

Examples of the alkanediyl group represented by R¹ include a methane-1,1-diyl group, an ethane-1,1-diyl group, an ethane-1,2-diyl group, a propane-1,1-diyl group, a propane-1,2-diyl group, a propane-1,3-diyl group, a propane-2,2-diyl group, a butane-1,2-diyl group, a butane-1,3-diyl group, a butane-1,4-diyl group, and a pentane-1,5-diyl group.

Among them, the alkanediyl group represented by R¹ is preferably an ethane-1,2-diyl group or a propane-1,2-diyl group, and more preferably an ethane-1,2-diyl group, from the viewpoint of enhancing the desired effect of the present invention.

In Formula (1-1), n represents an integer of 1 to 10. However, from the viewpoint of enhancing the desired effect of the present invention, an integer of 1 to 6 is preferable, an integer of 1 to 4 is more preferable, 1 or 2 is still more preferable, and 1 is particularly preferable. In a case where n is an integer of 2 to 10, n R¹s may be the same as or different from each other.

Specific examples of the monomer (A-1) include 2-hydroxyethyl vinyl ether, 3-hydroxypropyl vinyl ether, propylene glycol monovinyl ether, 1-hydroxypropane-2-yl vinyl ether, 4-hydroxybutyl vinyl ether, diethylene glycol monovinyl ether, dipropylene glycol monovinyl ether, and triethylene glycol monovinyl ether. One of them may be used alone, or two or more of them may be used in combination.

Among them, as the monomer (A-1), 2-hydroxyethyl vinyl ether and diethylene glycol monovinyl ether are preferable, and 2-hydroxyethyl vinyl ether is particularly preferable from the viewpoint of enhancing the desired effect of the present invention.

The content of the monomer (A-1) may be appropriately set according to the monomer species and the properties of the desired polymer. In a case where n in Formula (1-1) is 1 and a hydrophilic polymer is to be obtained, the content is preferably more than 58 mol%, more preferably 59 mol% or more, and particularly preferably 60 mol% or more in the total amount of the monomers, and in a case where n in Formula (1-1) is 1 and a hydrophilic polymer is to be obtained, the content is preferably less than 100 mol%, more preferably 98 mol% or less, still more preferably 95 mol% or less, and particularly preferably 92 mol% or less in the total amount of the monomers. As a specific range, in a case where n in Formula (1-1) is 1 and a hydrophilic polymer is to be obtained, the content is preferably more than 58 mol% and less than 100 mol%, more preferably 59 mol% or more and 98 mol% or less, still more preferably 59 mol% or more and 95 mol% or less, and particularly preferably 60 mol% or more and 92 mol% or less in the total amount of the monomers. In addition, the content of the monomer (A-1) in the polymerizable composition (α-1) included in the kit of the present invention is preferably also within the same range.

In a case where n in Formula (1-1) is 2 and a hydrophilic polymer is to be obtained, the content of the monomer (A-1) is preferably more than 43 mol%, more preferably 44 mol% or more, and particularly preferably 45 mol% or more in the total amount of the monomers, and in a case where n in Formula (1-1) is 2 and a hydrophilic polymer is to be obtained, the content is preferably less than 100 mol%, more preferably 95 mol% or less, still more preferably 90 mol% or less, and particularly preferably 85 mol% or less in the total amount of the monomers. As a specific range, in a case where n in Formula (1-1) is 2 and a hydrophilic polymer is to be obtained, the content is preferably more than 43 mol% and less than 100 mol%, more preferably 44 mol% or more and 95 mol% or less, still more preferably 44 mol% or more and 90 mol% or less, and particularly preferably 45 mol% or more and 85 mol% or less in the total amount of the monomers. In addition, the content of the monomer (A-1) in the polymerizable composition (α-2) included in the kit of the present invention is preferably also within the same range.

In addition, in cases where n in Formula (1-1) is 1 and a temperature-responsive polymer is to be obtained, the content of the monomer (A-1) is preferably 43 mol% or more, more preferably 44 mol% or more, and particularly preferably 45 mol% or more in the total amount of the monomers, and in a case where n in Formula (1-1) is 1 and a temperature-responsive polymer is to be obtained, the content is preferably 58 mol% or less, more preferably 56.5 mol% or less, and particularly preferably 55 mol% or less in the total amount of the monomers. As a specific range, in a case where n in Formula (1-1) is 1 and a temperature-responsive polymer is to be obtained, the content is preferably 43 mol% or more and 58 mol% or less, more preferably 44 mol% or more and 56.5 mol% or less, and particularly preferably 45 mol% or more and 55 mol% or less in the total amount of the monomers. In addition, the content of the monomer (A-1) in the polymerizable composition (β-1) included in the kit of the present invention is preferably also within the same range.

In addition, in cases where n in Formula (1-1) is 2 and a temperature-responsive polymer is to be obtained, the content of the monomer (A-1) is preferably 28 mol% or more, more preferably 32 mol% or more, and particularly preferably 35 mol% or more in the total amount of the monomers, and in a case where n in Formula (1-1) is 2 and a temperature-responsive polymer is to be obtained, the content is preferably 43 mol% or less, more preferably 41 mol% or less, and particularly preferably 40 mol% or less in the total amount of the monomers. As a specific range, in a case where n in Formula (1-1) is 2 and a temperature-responsive polymer is to be obtained, the content is preferably 28 mol% or more and 43 mol% or less, more preferably 32 mol% or more and 41 mol% or less, and particularly preferably 35 mol% or more and 40 mol% or less in the total amount of the monomers. In addition, the content of the monomer (A-1) in the polymerizable composition (β-2) included in the kit of the present invention is preferably also within the same range.

In addition, in a case where n in Formula (1-1) is 1 and a hydrophobic polymer is to be obtained, the content of the monomer (A-1) is preferably more than 0 mol%, more preferably 0.5 mol% or more, and particularly preferably 1 mol% or more in the total amount of the monomers. Furthermore, in a case where n in Formula (1-1) is 1 and a hydrophobic polymer is to be obtained, the content is preferably less than 43 mol%, more preferably 41.5 mol% or less, and particularly preferably 40 mol% or less in the total amount of the monomers. As a specific range, in a case where n in Formula (1-1) is 1 and a hydrophobic polymer is to be obtained, the content is preferably more than 0 mol% and less than 43 mol%, more preferably 0.5 mol% or more and 41.5 mol% or less, and particularly preferably 1 mol% or more and 40 mol% or less in the total amount of the monomers. In addition, the content of the monomer (A-1) in the polymerizable composition (γ-1) included in the kit of the present invention is preferably also within the same range.

In addition, in a case where n in Formula (1-1) is 2 and a hydrophobic polymer is to be obtained, the content of the monomer (A-1) is preferably more than 0 mol%, more preferably 1 mol% or more, and particularly preferably 5 mol% or more in the total amount of the monomers. Furthermore, in a case where n in Formula (1-1) is 2 and a hydrophobic polymer is to be obtained, the content is preferably less than 28 mol%, more preferably 24 mol% or less, and particularly preferably 20 mol% or less in the total amount of the monomers. As a specific range, in a case where n in Formula (1-1) is 2 and a hydrophobic polymer is to be obtained, the content is preferably more than 0 mol% and less than 28 mol%, more preferably 1 mol% or more and 24 mol% or less, and particularly preferably 5 mol% or more and 20 mol% or less in the total amount of the monomers. In addition, the content of the monomer (A-1) in the polymerizable composition (γ-2) included in the kit of the present invention is preferably also within the same range.

The content ratio of the monomer (A-1) may be appropriately set according to the monomer species and the properties of the desired polymer. In a case where n in Formula (1-1) is 1 and a hydrophilic polymer is to be obtained, the content ratio is preferably more than 58 mol parts, more preferably 59 mol parts or more, and particularly preferably 60 mol parts or more, relative to a total of 100 mol parts of the monomers (A-1) and (B-1). Furthermore, in a case where n in Formula (1-1) is 1 and a hydrophilic polymer is to be obtained, the content ratio is preferably less than 100 mol parts, more preferably 98 mol parts or less, still more preferably 95 mol parts or less, and particularly preferably 92 mol parts or less, relative to a total of 100 mol parts of the monomers (A-1) and (B-1). As a specific range, in a case where n in Formula (1-1) is 1 and a hydrophilic polymer is to be obtained, the content ratio is preferably more than 58 mol parts and less than 100 mol parts, more preferably 59 mol parts or more and 98 mol parts or less, still more preferably 59 mol parts or more and 95 mol parts or less, and particularly preferably 60 mol parts or more and 92 mol parts or less, relative to a total of 100 mol parts of monomers (A-1) and (B-1). In addition, the content ratio of the monomer (A-1) in the polymerizable composition (α-1) included in the kit of the present invention is also preferably within the same range.

In a case where n in Formula (1-1) is 2 and a hydrophilic polymer is to be obtained, the content ratio of the monomer (A-1) is preferably more than 43 mol parts, more preferably 44 mol parts or more, and particularly preferably 45 mol parts or more, relative to a total of 100 mol parts of the monomers (A-1) and (B-1). Furthermore, in a case where n in Formula (1-1) is 2 and a hydrophilic polymer is to be obtained, the content ratio is preferably less than 100 mol parts, more preferably 95 mol parts or less, still more preferably 90 mol parts or less, and particularly preferably 85 mol parts or less, relative to a total of 100 mol parts of the monomers (A-1) and (B-1). As a specific range, in a case where n in Formula (1-1) is 2 and a hydrophilic polymer is to be obtained, the content ratio is preferably more than 43 mol parts and less than 100 mol parts, more preferably 44 mol parts or more and 95 mol parts or less, still more preferably 44 mol parts or more and 90 mol parts or less, and particularly preferably 45 mol parts or more and 85 mol parts or less, relative to a total of 100 mol parts of the monomers (A-1) and (B-1). In addition, the content ratio of the monomer (A-1) in the polymerizable composition (α-2) included in the kit of the present invention is also preferably within the same range.

In a case where n in Formula (1-1) is 1 and a temperature-responsive polymer is to be obtained, the content ratio of the monomer (A-1) is preferably 43 mol parts or more, more preferably 44 mol parts or more, and particularly preferably 45 mol parts or more, relative to a total of 100 mol parts of the monomer (A-1) and the monomer (B-1). Furthermore, in a case where n in Formula (1-1) is 1 and a temperature-responsive polymer is to be obtained, the content ratio is preferably 58 mol parts or less, more preferably 56.5 mol parts or less, and particularly preferably 55 mol parts or less, relative to a total of 100 mol parts of the monomer (A-1) and the monomer (B-1). As a specific range, in a case where n in Formula (1-1) is 1 and a temperature-responsive polymer is to be obtained, the content ratio is preferably 43 mol parts or more and 58 mol parts or less, more preferably 44 mol parts or more and 56.5 mol parts or less, and particularly preferably 45 mol parts or more and 55 mol parts or less, relative to a total of 100 mol parts of the monomers (A-1) and (B-1). In addition, the content ratio of the monomer (A-1) in the polymerizable composition (β-1) included in the kit of the present invention is also preferably within the same range.

In a case where n in Formula (1-1) is 2 and a temperature-responsive polymer is to be obtained, the content ratio of the monomer (A-1) is preferably 28 mol parts or more, more preferably 32 mol parts or more, and particularly preferably 35 mol parts or more, relative to a total of 100 mol parts of the monomer (A-1) and the monomer (B-1). Furthermore, in a case where n in Formula (1-1) is 2 and a temperature-responsive polymer is to be obtained, the content ratio is preferably 43 mol parts or less, more preferably 41 mol parts or less, and particularly preferably 40 mol parts or less, relative to a total of 100 mol parts of the monomer (A-1) and the monomer (B-1). As a specific range, in a case where n in Formula (1-1) is 2 and a temperature-responsive polymer is to be obtained, the content ratio is preferably 28 mol parts or more and 43 mol parts or less, more preferably 32 mol parts or more and 41 mol parts or less, and particularly preferably 35 mol parts or more and 40 mol parts or less, relative to a total of 100 mol parts of the monomers (A-1) and (B-1). In addition, the content ratio of the monomer (A-1) in the polymerizable composition (β-2) included in the kit of the present invention is also preferably within the same range.

In a case where n in Formula (1-1) is 1 and a hydrophobic polymer is to be obtained, the content ratio of the monomer (A-1) is preferably more than 0 mol parts, more preferably 0.5 mol parts or more, and particularly preferably 1 mol parts or more, relative to a total of 100 mol parts of the monomer (A-1) and the monomer (B-1). Furthermore, in a case where n in Formula (1-1) is 1 and a hydrophobic polymer is to be obtained, the content ratio is preferably less than 43 mol parts, more preferably 41.5 mol parts or less, and particularly preferably 40 mol parts or less, relative to a total of 100 mol parts of the monomer (A-1) and the monomer (B-1). As a specific range, in a case where n in Formula (1-1) is 1 and a hydrophobic polymer is to be obtained, the content ratio is preferably more than 0 mol parts and less than 43 mol parts, more preferably 0.5 mol parts or more and 41.5 mol parts or less, and particularly preferably 1 mol parts or more and 40 mol parts or less, relative to a total of 100 mol parts of the monomers (A-1) and (B-1). In addition, the content ratio of the monomer (A-1) in the polymerizable composition (γ-1) included in the kit of the present invention is also preferably within the same range.

In a case where n in Formula (1-1) is 2 and a hydrophobic polymer is to be obtained, the content ratio of the monomer (A-1) is preferably more than 0 mol parts, more preferably 1 mol parts or more, and particularly preferably 5 mol parts or more, relative to a total of 100 mol parts of the monomer (A-1) and the monomer (B-1). Furthermore, in a case where n in Formula (1-1) is 2 and a hydrophobic polymer is to be obtained, the content ratio is preferably less than 28 mol parts, more preferably 24 mol parts or less, and particularly preferably 20 mol parts or less, relative to a total of 100 mol parts of the monomer (A-1) and the monomer (B-1). As a specific range, in a case where n in Formula (1-1) is 2 and a hydrophobic polymer is to be obtained, the content ratio is preferably more than 0 mol parts and less than 28 mol parts, more preferably 1 mol parts or more and 24 mol parts or less, and particularly preferably 5 mol parts or more and 20 mol parts or less, relative to a total of 100 mol parts of the monomers (A-1) and (B-1). In addition, the content ratio of the monomer (A-1) in the polymerizable composition (γ-2) included in the kit of the present invention is also preferably within the same range.

### (Monomer (B-1))

The monomer (B-1) is a cyclic monomer represented by Formula (2-1) above.

In Formula (2-1), R² represents a linear alkanediyl group having 1 to 5 carbon atoms.

The number of carbon atoms of the linear alkanediyl group represented by R² is preferably 2 to 5, and more preferably 3 or 4 from the viewpoint of enhancing the desired effect of the present invention.

Examples of the linear alkanediyl group represented by R² include a methane-1,1-diyl group, an ethane-1,2-diyl group, a propane-1,3-diyl group, a butane-1,4-diyl group, and a pentane-1,5-diyl group.

Among these, the linear alkanediyl group represented by R² is preferably a propane-1,3-diyl group or a butane-1,4-diyl group, and more preferably a butane-1,4-diyl group, from the viewpoint of enhancing the desired effect of the present invention.

Specific examples of the monomer (B-1) include 2-methylene-1,3-dioxolane, 2-methylene-1,3-dioxane, 2-methylene-1,3-dioxepane, and 2-methylene-1,3-dioxocane. One of them may be used alone, or two or more of them may be used in combination.

Among these, the monomer (B-1) is preferably 2-methylene-1,3-dioxane and 2-methylene-1,3-dioxepane, and more preferably 2-methylene-1,3-dioxepane from the viewpoint of enhancing the desired effects of the present invention.

The content of the monomer (B-1) may be appropriately set according to the monomer species and the properties of the desired polymer. In a case where n in Formula (1-1) is 1 and a hydrophilic polymer is to be obtained, the content is preferably more than 0 mol%, more preferably 2 mol% or more, still more preferably 5 mol% or more, and particularly preferably 8 mol% or more, in the total amount of the monomers. Furthermore, in a case where n in Formula (1-1) is 1 and a hydrophilic polymer is to be obtained, the content is preferably less than 42 mol%, more preferably 41 mol% or less, and particularly preferably 40 mol% or less in the total amount of the monomers. As a specific range, in a case where n in Formula (1-1) is 1 and a hydrophilic polymer is to be obtained, the content is preferably more than 0 mol% and less than 42 mol%, more preferably 2 mol% or more and 41 mol% or less, still more preferably 5 mol% or more and 41 mol% or less, and particularly preferably 8 mol% or more and 40 mol% or less in the total amount of the monomers. In addition, the content of the monomer (B-1) in the polymerizable composition (α-1) included in the kit of the present invention is preferably also within the same range.

In a case where n in Formula (1-1) is 2 and a hydrophilic polymer is to be obtained, the content of the monomer (B-1) is preferably more than 0 mol%, more preferably 5 mol% or more, still more preferably 10 mol% or more, and particularly preferably 15 mol% or more in the total amount of the monomers. Furthermore, in a case where n in Formula (1-1) is 2 and a hydrophilic polymer is to be obtained, the content is preferably less than 57 mol%, more preferably 56 mol% or less, and particularly preferably 55 mol% or less in the total amount of the monomers. As a specific range, in a case where n in Formula (1-1) is 2 and a hydrophilic polymer is to be obtained, the content is preferably more than 0 mol% and less than 57 mol%, more preferably 5 mol% or more and 56 mol% or less, still more preferably 10 mol% or more and 56 mol% or less, and particularly preferably 15 mol% or more and 55 mol% or less in the total amount of the monomers. In addition, the content of the monomer (B-1) in the polymerizable composition (α-2) included in the kit of the present invention is preferably also within the same range.

In addition, in cases where n in Formula (1-1) is 1 and a temperature-responsive polymer is to be obtained, the content of the monomer (B-1) is preferably 42 mol% or more, more preferably 43.5 mol% or more, and particularly preferably 45 mol% or more in the total amount of the monomers, and in a case where n in Formula (1-1) is 1 and a temperature-responsive polymer is to be obtained, the content is preferably 57 mol% or less, more preferably 56 mol% or less, and particularly preferably 55 mol% or less in the total amount of the monomers. As a specific range, in a case where n in Formula (1-1) is 1 and a temperature-responsive polymer is to be obtained, the content is preferably 42 mol% or more and 57 mol% or less, more preferably 43.5 mol% or more and 56 mol% or less, and particularly preferably 45 mol% or more and 55 mol% or less in the total amount of the monomers. In addition, the content of the monomer (B-1) in the polymerizable composition (β-1) included in the kit of the present invention is preferably also within the same range.

In addition, in cases where n in Formula (1-1) is 2 and a temperature-responsive polymer is to be obtained, the content of the monomer (B-1) is preferably 57 mol% or more, more preferably 58 mol% or more, and particularly preferably 60 mol% or more in the total amount of the monomers, and in a case where n in Formula (1-1) is 2 and a temperature-responsive polymer is to be obtained, the content is preferably 72 mol% or less, more preferably 68 mol% or less, and particularly preferably 65 mol% or less in the total amount of the monomers. As a specific range, in a case where n in Formula (1-1) is 2 and a temperature-responsive polymer is to be obtained, the content is preferably 57 mol% or more and 72 mol% or less, more preferably 58 mol% or more and 68 mol% or less, and particularly preferably 60 mol% or more and 65 mol% or less in the total amount of the monomers. In addition, the content of the monomer (B-1) in the polymerizable composition (β-2) included in the kit of the present invention is preferably also within the same range.

In addition, in a case where n in Formula (1-1) is 1 and a hydrophobic polymer is to be obtained, the content of the monomer (B-1) is preferably more than 57 mol%, more preferably 58.5 mol% or more, and particularly preferably 60 mol% or more in the total amount of the monomers. Furthermore, in a case where n in Formula (1-1) is 1 and a hydrophobic polymer is to be obtained, the content is preferably less than 100 mol%, more preferably 99.5 mol% or less, and particularly preferably 99 mol% or less in the total amount of the monomers. As a specific range, in a case where n in Formula (1-1) is 1 and a hydrophobic polymer is to be obtained, the content is preferably more than 57 mol% and less than 100 mol%, more preferably 58.5 mol% or more and 99.5 mol% or less, and particularly preferably 60 mol% or more and 99 mol% or less in the total amount of the monomers. In addition, the content of the monomer (B-1) in the polymerizable composition (γ-1) included in the kit of the present invention is preferably also within the same range.

In addition, in a case where n in Formula (1-1) is 2 and a hydrophobic polymer is to be obtained, the content of the monomer (B-1) is preferably more than 72 mol%, more preferably 76 mol% or more, and particularly preferably 80 mol% or more in the total amount of the monomers. Furthermore, in a case where n in Formula (1-1) is 2 and a hydrophobic polymer is to be obtained, the content is preferably less than 100 mol%, more preferably 99 mol% or less, and particularly preferably 95 mol% or less in the total amount of the monomers. As a specific range, in a case where n in Formula (1-1) is 2 and a hydrophobic polymer is to be obtained, the content is preferably more than 72 mol% and less than 100 mol%, more preferably 76 mol% or more and 99 mol% or less, and particularly preferably 80 mol% or more and 95 mol% or less in the total amount of the monomers. In addition, the content of the monomer (B-1) in the polymerizable composition (γ-2) included in the kit of the present invention is preferably also within the same range.

The content ratio of the monomer (B-1) may be appropriately set according to the monomer species and the properties of the desired polymer. In a case where n in Formula (1-1) is 1 and a hydrophilic polymer is to be obtained, the content ratio is preferably more than 0 mol parts, more preferably 2 mol parts or more, still more preferably 5 mol parts or more, and particularly preferably 8 mol parts or more, relative to a total of 100 mol parts of the monomer (A-1) and the monomer (B-1). Furthermore, in a case where n in Formula (1-1) is 1 and a hydrophilic polymer is to be obtained, the content ratio is preferably less than 42 mol parts, more preferably 41 mol parts or less, and particularly preferably 40 mol parts or less, relative to a total of 100 mol parts of the monomer (A-1) and the monomer (B-1). As a specific range, in a case where n in Formula (1-1) is 1 and a hydrophilic polymer is to be obtained, the content ratio is preferably more than 0 mol parts and less than 42 mol parts, more preferably 2 mol parts or more and 41 mol parts or less, still more preferably 5 mol parts or more and 41 mol parts or less, and particularly preferably 8 mol parts or more and 40 mol parts or less, relative to a total of 100 mol parts of the monomers (A-1) and (B-1). In addition, the content ratio of the monomer (B-1) in the polymerizable composition (α-1) included in the kit of the present invention is also preferably within the same range.

In a case where n in Formula (1-1) is 2 and a hydrophilic polymer is to be obtained, the content ratio of the monomer (B-1) is preferably more than 0 mol parts, more preferably 5 mol parts or more, still more preferably 10 mol parts or more, and particularly preferably 15 mol parts or more, relative to a total of 100 mol parts of the monomer (A-1) and the monomer (B-1). Furthermore, in a case where n in Formula (1-1) is 2 and a hydrophilic polymer is to be obtained, the content ratio is preferably less than 57 mol parts, more preferably 56 mol parts or less, and particularly preferably 55 mol parts or less, relative to a total of 100 mol parts of the monomer (A-1) and the monomer (B-1). As a specific range, in a case where n in Formula (1-1) is 2 and a hydrophilic polymer is to be obtained, the content ratio is preferably more than 0 mol parts and less than 57 mol parts, more preferably 5 mol parts or more and 56 mol parts or less, still more preferably 10 mol parts or more and 56 mol parts or less, and particularly preferably 15 mol parts or more and 55 mol parts or less, relative to a total of 100 mol parts of the monomers (A-1) and (B-1). In addition, the content ratio of the monomer (B-1) in the polymerizable composition (α-2) included in the kit of the present invention is also preferably within the same range.

In a case where n in Formula (1-1) is 1 and a temperature-responsive polymer is to be obtained, the content ratio of the monomer (B-1) is preferably 42 mol parts or more, more preferably 43.5 mol parts or more, and particularly preferably 45 mol parts or more, relative to a total of 100 mol parts of the monomer (A-1) and the monomer (B-1). Furthermore, in a case where n in Formula (1-1) is 1 and a temperature-responsive polymer is to be obtained, the content ratio is preferably 57 mol parts or less, more preferably 56 mol parts or less, and particularly preferably 55 mol parts or less, relative to a total of 100 mol parts of the monomer (A-1) and the monomer (B-1). As a specific range, in a case where n in Formula (1-1) is 1 and a temperature-responsive polymer is to be obtained, the content ratio is preferably 42 mol parts or more and 57 mol parts or less, more preferably 43.5 mol parts or more and 56 mol parts or less, and particularly preferably 45 mol parts or more and 55 mol parts or less, relative to a total of 100 mol parts of the monomers (A-1) and (B-1). In addition, the content ratio of the monomer (B-1) in the polymerizable composition (β-1) included in the kit of the present invention is also preferably within the same range.

In a case where n in Formula (1-1) is 2 and a temperature-responsive polymer is to be obtained, the content ratio of the monomer (B-1) is preferably 57 mol parts or more, more preferably 58 mol parts or more, and particularly preferably 60 mol parts or more, relative to a total of 100 mol parts of the monomer (A-1) and the monomer (B-1). Furthermore, in a case where n in Formula (1-1) is 2 and a temperature-responsive polymer is to be obtained, the content ratio is preferably 72 mol parts or less, more preferably 68 mol parts or less, and particularly preferably 65 mol parts or less, relative to a total of 100 mol parts of the monomer (A-1) and the monomer (B-1). As a specific range, in a case where n in Formula (1-1) is 2 and a temperature-responsive polymer is to be obtained, the content ratio is preferably 57 mol parts or more and 72 mol parts or less, more preferably 58 mol parts or more and 68 mol parts or less, and still more preferably 60 mol parts or more and 65 mol parts or less, relative to a total of 100 mol parts of the monomers (A-1) and (B-1). In addition, the content ratio of the monomer (B-1) in the polymerizable composition (β-2) included in the kit of the present invention is also preferably within the same range.

In a case where n in Formula (1-1) is 1 and a hydrophobic polymer is to be obtained, the content ratio of the monomer (B-1) is preferably more than 57 mol parts, more preferably 58.5 mol parts or more, and particularly preferably 60 mol parts or more, relative to a total of 100 mol parts of the monomer (A-1) and the monomer (B-1). Furthermore, in a case where n in Formula (1-1) is 1 and a hydrophobic polymer is to be obtained, the content ratio is preferably less than 100 mol parts, more preferably 99.5 mol parts or less, and particularly preferably 99 mol parts or less, relative to a total of 100 mol parts of the monomer (A-1) and the monomer (B-1). As a specific range, in a case where n in Formula (1-1) is 1 and a hydrophobic polymer is to be obtained, the content ratio is preferably more than 57 mol parts and less than 100 mol parts, more preferably 58.5 mol parts or more and 99.5 mol parts or less, and particularly preferably 60 mol parts or more and 99 mol parts or less, relative to a total of 100 mol parts of the monomers (A-1) and (B-1). In addition, the content ratio of the monomer (B-1) in the polymerizable composition (γ-1) included in the kit of the present invention is also preferably within the same range.

In a case where n in Formula (1-1) is 2 and a hydrophobic polymer is to be obtained, the content ratio of the monomer (B-1) is preferably more than 72 mol parts, more preferably 76 mol parts or more, and particularly preferably 80 mol parts or more, relative to a total of 100 mol parts of the monomer (A-1) and the monomer (B-1). Furthermore, in a case where n in Formula (1-1) is 2 and a hydrophobic polymer is to be obtained, the content ratio is preferably less than 100 mol parts, more preferably 99 mol parts or less, and particularly preferably 95 mol parts or less, relative to a total of 100 mol parts of the monomer (A-1) and the monomer (B-1). As a specific range, in a case where n in Formula (1-1) is 2 and a hydrophobic polymer is to be obtained, the content ratio is preferably more than 72 mol parts and less than 100 mol parts, more preferably 76 mol parts or more and 99 mol parts or less, and particularly preferably 80 mol parts or more and 95 mol parts or less, relative to a total of 100 mol parts of the monomers (A-1) and (B-1). In addition, the content ratio of the monomer (B-1) in the polymerizable composition (γ-2) included in the kit of the present invention is also preferably within the same range.

In addition to the monomers (A-1) and (B-1), the polymerizable composition of the present invention may further contain one or two or more components selected from a radical polymerization initiator and a solvent.

Examples of radical polymerization initiators include azo-based polymerization initiators such as 2,2'-azobis(isobutyronitrile), 2,2'-azobis(4-methoxy-2,4-dimethylvaleronitrile), 2,2'-azobis(2,4-dimethylvaleronitrile), dimethyl 2,2'-azobis(2-methylpropionate), 2,2'-azobis(2-methylbutyronitrile), 1,1'-azobis(cyclohexanecarbonitrile), 2,2'-azobis[N-(2-propenyl)-2-methylpropionamide], 2,2'-azobis[N-butyl-2-methylpropionamide], 2,2'-azobis[2-(2-imidazolin-2-yl)propane] dihydrochloride, 2,2'-azobis[2-(2-imidazolin-2-yl)propane] disulfate dihydrate, 2,2'-azobis(2-methylpropionamide) dihydrate, 2,2'-azobis[N-(2-carboxyethyl)-2-methylpropionamide] tetrahydrate, 2,2'-azobis[2-(2-imidazolin-2-yl)propane], 2,2'-azobis[2-methyl-N-(2-hydroxyethyl)propionamide], and 2,2'-azobis[1-imino-1-pyrrolidino-2-methylpropane] dihydrochloride; and peroxidebased polymerization initiators such as t-butyl hydroperoxide, cumene hydroperoxide, t-butyl peroxyacetate, t-butyl peroxybenzoate, t-butyl peroxyoctanoate, t-butyl peroxyneodecanoate, t-butyl peroxyisobutyrate, lauroyl peroxide, t-amyl peroxypivalate, t-butyl peroxypivalate, dicumyl peroxide, benzoyl peroxide, potassium persulfate, and ammonium persulfate. One of them may be used alone, or two or more of them may be used in combination.

The molar ratio of the content of the radical polymerization initiator relative to the total of the monomers (A-1) and (B-1) [(radical polymerization initiator)/((A-1)+(B-1))] is preferably 0.0001 or more and 5 or less, more preferably 0.0005 or more and 2.5 or less, and particularly preferably 0.001 or more and 1 or less from the viewpoint of polymerization reaction control.

Examples of solvents include aqueous solvents such as water; monoalcohol solvents such as methanol, ethanol, n-propanol, isopropanol, and n-butanol; glycol solvents such as ethylene glycol and propylene glycol; cyclic ether solvents such as tetrahydrofuran and dioxane; glycol monoether solvents such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, and 3-methoxybutanol; glycol diether solvents such as ethylene glycol dimethyl ether, ethylene glycol diethyl ether, ethylene glycol ethyl methyl ether, diethylene glycol dimethyl ether, diethylene glycol diethyl ether, diethylene glycol ethyl methyl ether, propylene glycol dimethyl ether, and propylene glycol diethyl ether; glycol monoether ester solvents such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, propylene glycol monoethyl ether acetate, propylene glycol monobutyl ether acetate, dipropylene glycol monomethyl ether acetate, dipropylene glycol monoethyl ether acetate, dipropylene glycol monobutyl ether acetate, and 3-methoxybutyl acetate; alkyl ester solvents such as methyl acetate, ethyl acetate, propyl acetate, isopropyl acetate, butyl acetate, methyl propionate, ethyl propionate, butyl propionate, methyl lactate, ethyl lactate, butyl lactate, methyl 3-methoxypropionate, ethyl 3-methoxypropionate, methyl 3-ethoxypropionate, ethyl 3-ethoxypropionate, methyl acetoacetate, and ethyl acetoacetate; ketone solvents such as acetone, methyl ethyl ketone, methyl isobutyl ketone, and cyclohexanone; aromatic hydrocarbon solvents such as benzene, toluene, xylene, and ethylbenzene; aliphatic hydrocarbon solvents such as hexane, cyclohexane, and octane; and amide solvents such as dimethylformamide, dimethylacetamide, and N-methylpyrrolidone. One of them may be used alone, or two or more of them may be used in combination.

The content mass ratio of the solvent relative to the total of the monomers (A-1) and (B-1) [(Solvent)/((A-1)+(B-1))] is usually 0 or more and 50 or less, preferably 0 or more and 25 or less, and more preferably 0 or more and 10 or less from the viewpoint of reaction efficiency, and polymerization reaction control, for example.

By using the polymerizable composition of the present invention, a temperature-responsive polymer, a hydrophilic polymer, and a hydrophobic polymer can be easily produced separately. In addition, each of the separately produced polymers has low cytotoxicity and has alkali decomposability. Incidentally, the reason why the temperature-responsive polymer, the hydrophilic polymer, and the hydrophobic polymer can be separately produced by the combination of the monomer (A-1) and the monomer (B-1) is not necessarily clear. However, the present inventors infer that the difference between the polymerizability of the monomer (A-1) and the polymerizability of the monomer (B-1) is small, and the balance between the strength of hydrophilicity of the monomer (A-1) and the strength of hydrophobicity of the monomer (B-1) is good.

### [Copolymer]

The copolymer of the present invention has the following structural units (A-2) and (B-2).
(A-2) Structural unit represented by the following formula (1-2)
(B-2) Structural unit represented by the following formula (2-2)

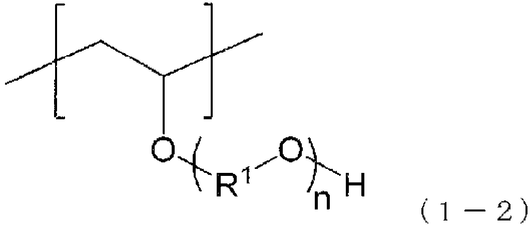

[Each symbol in Formula (1-2) has the same meaning as described above.]

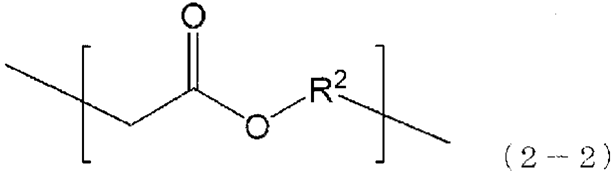

[Each symbol in Formula (2-2) has the same meaning as described above.]

In a case where n in Formula (1-1) is 1 and the polymer is a hydrophilic polymer, the total content of the structural unit (A-2) is preferably more than 80 mol%, more preferably 81.5 mol% or more, and particularly preferably 83 mol% or more, relative to the total structural units of the copolymer. Furthermore, in a case where n in Formula (1-1) is 1 and the polymer is a hydrophilic polymer, the total content is preferably less than 100 mol%, more preferably 97.5 mol% or less, and particularly preferably 95 mol% or less, relative to the total structural units of the copolymer. As a specific range, in a case where n in Formula (1-1) is 1 and the polymer is a hydrophilic polymer, the content is preferably more than 80 mol% and less than 100 mol%, more preferably 81.5 mol% or more and 97.5 mol% or less, and particularly preferably 83 mol% or more and 95 mol% or less.

In a case where n in Formula (1-1) is 2 and the polymer is a hydrophilic polymer, the total content of the structural unit (A-2) is preferably more than 66.5 mol%, and more preferably 67 mol% or more, relative to the total structural units of the copolymer. Furthermore, in a case where n in Formula (1-1) is 2 and the polymer is a hydrophilic polymer, the total content is preferably less than 100 mol%, more preferably 97.5 mol% or less, and particularly preferably 95 mol% or less, relative to the total structural units of the copolymer. As a specific range, in a case where n in Formula (1-1) is 2 and the polymer is a hydrophilic polymer, the content is preferably more than 66.5 mol% and less than 100 mol%, more preferably 67 mol% or more and 97.5 mol% or less, and particularly preferably 67 mol% or more and 95 mol% or less.

In a case where n in Formula (1-1) is 1 and the polymer is a temperature-responsive polymer, the total content of the structural unit (A-2) is preferably 71 mol% or more, and particularly preferably 72 mol% or more, relative to the total structural units of the copolymer. Furthermore, in a case where n in Formula (1-1) is 1 and the polymer is a temperature-responsive polymer, the total content is preferably 80 mol% or less, more preferably 78.5 mol% or less, and particularly preferably 77 mol% or less, relative to the total structural units of the copolymer. As a specific range, in a case where n in Formula (1-1) is 1 and the polymer is a temperature-responsive polymer, the total content is preferably 71 mol% or more and 80 mol% or less, more preferably 71 mol% or more and 78.5 mol% or less, and particularly preferably 72 mol% or more and 77 mol% or less.

In a case where n in Formula (1-1) is 2 and the polymer is a temperature-responsive polymer, the total content of the structural unit (A-2) is preferably 60 mol% or more, and particularly preferably 62 mol% or more, relative to the total structural units of the copolymer. Furthermore, in a case where n in Formula (1-1) is 2 and the polymer is a temperature-responsive polymer, the total content is preferably 66.5 mol% or less, more preferably 66 mol% or less, and particularly preferably 65.5 mol% or less, relative to the total structural units of the copolymer. As a specific range, in a case where n in Formula (1-1) is 2 and the polymer is a temperature-responsive polymer, the total content is preferably 60 mol% or more and 66.5 mol% or less, more preferably 60 mol% or more and 66 mol% or less, and particularly preferably 62 mol% or more and 65.5 mol% or less.

In a case where n in Formula (1-1) is 1 and the polymer is a hydrophobic polymer, the total content of the structural unit (A-2) is preferably more than 0 mol%, more preferably 7.5 mol% or more, and particularly preferably 15 mol% or more, relative to the total structural units of the copolymer. Furthermore, in a case where n in Formula (1-1) is 1 and the polymer is a hydrophobic polymer, the total content is preferably less than 71 mol%, and particularly preferably 70 mol% or less, relative to the total structural units of the copolymer. As a specific range, in a case where n in Formula (1-1) is 1 and the polymer is a hydrophobic polymer, the total content is preferably more than 0 mol% and less than 71 mol%, more preferably 7.5 mol% or more and less than 71 mol%, and particularly preferably 15 mol% or more and 70 mol% or less.

In a case where n in Formula (1-1) is 2 and the polymer is a hydrophobic polymer, the total content of the structural unit (A-2) is preferably more than 0 mol%, more preferably 7.5 mol% or more, and particularly preferably 15 mol% or more, relative to the total structural units of the copolymer. Furthermore, in a case where n in Formula (1-1) is 2 and the polymer is a hydrophobic polymer, the total content is preferably less than 60 mol%, and particularly preferably 58 mol% or less, relative to the total structural units of the copolymer. As a specific range, in a case where n in Formula (1-1) is 2 and the polymer is a hydrophobic polymer, the total content is preferably more than 0 mol% and less than 60 mol%, more preferably 7.5 mol% or more and less than 60 mol%, and particularly preferably 15 mol% or more and 58 mol% or less.

In a case where n in Formula (1-1) is 1 and the polymer is a hydrophilic polymer, the total content ratio of the structural unit (A-2) is preferably more than 80 mol parts, more preferably 81.5 mol parts or more, and particularly preferably 83 mol parts or more, relative to a total of 100 mol parts of the structural units (A-2) and (B-2). Furthermore, in a case where n in Formula (1-1) is 1 and the polymer is a hydrophilic polymer, the total content ratio is preferably less than 100 mol parts, more preferably 97.5 mol parts or less, and particularly preferably 95 mol parts or less, relative to a total of 100 mol parts of the structural units (A-2) and (B-2). As a specific range, in a case where n in Formula (1-1) is 1 and the polymer is a hydrophilic polymer, the total content ratio is preferably more than 80 mol parts and less than 100 mol parts, more preferably 81.5 mol parts or more and 97.5 mol parts or less, and particularly preferably 83 mol parts or more and 95 mol parts or less.

In a case where n in Formula (1-1) is 2 and the polymer is a hydrophilic polymer, the total content ratio of the structural unit (A-2) is preferably more than 66.5 mol parts, and more preferably 67 mol parts or more, relative to a total of 100 mol parts of the structural units (A-2) and (B-2). Furthermore, in a case where n in Formula (1-1) is 2 and the polymer is a hydrophilic polymer, the total content ratio is preferably less than 100 mol parts, more preferably 97.5 mol parts or less, and particularly preferably 95 mol parts or less, relative to a total of 100 mol parts of the structural units (A-2) and (B-2). As a specific range, in a case where n in Formula (1-1) is 2 and the polymer is a hydrophilic polymer, the total content ratio is preferably more than 66.5 mol parts and less than 100 mol parts, more preferably 67 mol parts or more and 97.5 mol parts or less, and particularly preferably 67 mol parts or more and 95 mol parts or less.

In a case where n in Formula (1-1) is 1 and the polymer is a temperature-responsive polymer, the total content ratio of the structural units (A-2) is preferably 71 mol parts or more, and more preferably 72 mol parts or more, relative to a total of 100 mol parts of the structural units (A-2) and (B-2). Furthermore, in a case where n in Formula (1-1) is 1 and a polymer is a temperature-responsive polymer, the total content ratio is preferably 80 mol parts or less, more preferably 78.5 mol parts or less, and particularly preferably 77 mol parts or less, relative to a total of 100 mol parts of the structural units (A-2) and (B-2). As a specific range, in a case where n in Formula (1-1) is 1 and the polymer is a temperature-responsive polymer, the total content ratio is preferably 71 mol parts or more and 80 mol parts or less, more preferably 71 mol parts or more and 78.5 mol parts or less, and particularly preferably 72 mol parts or more and 77 mol parts or less.

In a case where n in Formula (1-1) is 2 and the polymer is a temperature-responsive polymer, the total content ratio of the structural units (A-2) is preferably 60 mol parts or more, and more preferably 62 mol parts or more, relative to a total of 100 mol parts of the structural units (A-2) and (B-2). Furthermore, in a case where n in Formula (1-1) is 2 and a polymer is a temperature-responsive polymer, the total content ratio is preferably 66.5 mol parts or less, more preferably 66 mol parts or less, and particularly preferably 65.5 mol parts or less, relative to a total of 100 mol parts of the structural units (A-2) and (B-2). As a specific range, in a case where n in Formula (1-1) is 2 and the polymer is a temperature-responsive polymer, the total content ratio is preferably 60 mol parts or more and 66.5 mol parts or less, more preferably 60 mol parts or more and 66 mol parts or less, and particularly preferably 62 mol parts or more and 65.5 mol parts or less.

In a case where n in Formula (1-1) is 1 and the polymer is a hydrophobic polymer, the total content ratio of the structural unit (A-2) is preferably more than 0 mol parts, more preferably 7.5 mol parts or more, and particularly preferably 15 mol parts or more, relative to a total of 100 mol parts of the structural units (A-2) and (B-2). Furthermore, in a case where n in Formula (1-1) is 1 and the polymer is a hydrophobic polymer, the total content ratio is preferably less than 71 mol parts, and particularly preferably 70 mol parts or less, relative to a total of 100 mol parts of the structural units (A-2) and (B-2). As a specific range, in a case where n in Formula (1-1) is 1 and the polymer is a hydrophobic polymer, the total content ratio is preferably more than 0 mol parts and less than 71 mol parts, more preferably 7.5 mol parts or more and less than 71 mol parts, and particularly preferably 15 mol parts or more and 70 mol parts or less.

In a case where n in Formula (1-1) is 2 and the polymer is a hydrophobic polymer, the total content ratio of the structural unit (A-2) is preferably more than 0 mol parts, more preferably 7.5 mol parts or more, and particularly preferably 15 mol parts or more, relative to a total of 100 mol parts of the structural units (A-2) and (B-2). Furthermore, in a case where n in Formula (1-1) is 2 and the polymer is a hydrophobic polymer, the total content ratio is preferably less than 60 mol parts, and particularly preferably 58 mol parts or less, relative to a total of 100 mol parts of the structural units (A-2) and (B-2). As a specific range, in a case where n in Formula (1-1) is 2 and the polymer is a hydrophobic polymer, the total content ratio is preferably more than 0 mol parts and less than 60 mol parts, more preferably 7.5 mol parts or more and less than 60 mol parts, and particularly preferably 15 mol parts or more and 58 mol parts or less.

In a case where n in Formula (1-1) is 1 and the polymer is a hydrophilic polymer, the total content of the structural unit (B-2) is preferably more than 0 mol%, more preferably 2.5 mol% or more, and particularly preferably 5 mol% or more, relative to the total structural units of the copolymer. Furthermore, in a case where n in Formula (1-1) is 1 and the polymer is a hydrophilic polymer, the total content is preferably less than 20 mol%, more preferably 18.5 mol% or less, and particularly preferably 17 mol% or less, relative to the total structural units of the copolymer. As a specific range, in a case where n in Formula (1-1) is 1 and the polymer is a hydrophilic polymer, the total content is preferably more than 0 mol% and less than 20 mol%, more preferably 2.5 mol% or more and 18.5 mol% or less, and particularly preferably 5 mol% or more and 17 mol% or less.

In a case where n in Formula (1-1) is 2 and the polymer is a hydrophilic polymer, the total content of the structural unit (B-2) is preferably more than 0 mol%, more preferably 2.5 mol% or more, and particularly preferably 5 mol% or more, relative to the total structural units of the copolymer. Furthermore, in a case where n in Formula (1-1) is 2 and the polymer is a hydrophilic polymer, the total content is preferably less than 33.5 mol%, and more preferably 33 mol% or less, relative to the total structural units of the copolymer. As a specific range, in a case where n in Formula (1-1) is 2 and the polymer is a hydrophilic polymer, the total content is preferably more than 0 mol% and less than 33.5 mol%, more preferably 2.5 mol% or more and 33 mol% or less, and particularly preferably 5 mol% or more and 33 mol% or less.

In a case where n in Formula (1-1) is 1 and the polymer is a temperature-responsive polymer, the total content of the structural unit (B-2) is preferably 20 mol% or more, more preferably 21.5 mol% or more, and particularly preferably 23 mol% or more, relative to the total structural units of the copolymer. Furthermore, in a case where n in Formula (1-1) is 1 and the polymer is a temperature-responsive polymer, the total content is preferably 29 mol% or less and particularly preferably 28 mol% or less, relative to the total structural units of the copolymer. As a specific range, in a case where n in Formula (1-1) is 1 and the polymer is a temperature-responsive polymer, the total content is preferably 20 mol% or more and 29 mol% or less, more preferably 21.5 mol% or more and 29 mol% or less, and particularly preferably 23 mol% or more and 28 mol% or less.

In a case where n in Formula (1-1) is 2 and the polymer is a temperature-responsive polymer, the total content of the structural unit (B-2) is preferably 33.5 mol% or more, more preferably 34 mol% or more, and particularly preferably 34.5 mol% or more, relative to the total structural units of the copolymer. Furthermore, in a case where n in Formula (1-1) is 2 and the polymer is a temperature-responsive polymer, the total content is preferably 40 mol% or less and particularly preferably 38 mol% or less, relative to the total structural units of the copolymer. As a specific range, in a case where n in Formula (1-1) is 2 and the polymer is a temperature-responsive polymer, the total content is preferably 33.5 mol% or more and 40 mol% or less, more preferably 34 mol% or more and 40 mol% or less, and particularly preferably 34.5 mol% or more and 38 mol% or less.

In a case where n in Formula (1-1) is 1 and the polymer is a hydrophobic polymer, the total content of the structural unit (B-2) is preferably more than 29 mol%, and particularly preferably 30 mol% or more, relative to the total structural units of the copolymer. Furthermore, in a case where n in Formula (1-1) is 1 and the polymer is a hydrophobic polymer, the total content is preferably less than 100 mol%, and more preferably 92.5 mol% or less, and particularly preferably 85 mol% or less, relative to the total structural units of the copolymer. As a specific range, in a case where n in Formula (1-1) is 1 and the polymer is a hydrophobic polymer, the total content is preferably more than 29 mol% and less than 100 mol%, more preferably more than 29 mol% and 92.5 mol% or less, and particularly preferably 30 mol% or more and 85 mol% or less.

In a case where n in Formula (1-1) is 2 and the polymer is a hydrophobic polymer, the total content of the structural unit (B-2) is preferably more than 40 mol%, and particularly preferably 42 mol% or more, relative to the total structural units of the copolymer. Furthermore, in a case where n in Formula (1-1) is 2 and the polymer is a hydrophobic polymer, the total content is preferably less than 100 mol%, and more preferably 92.5 mol% or less, and particularly preferably 85 mol% or less, relative to the total structural units of the copolymer. As a specific range, in a case where n in Formula (1-1) is 2 and the polymer is a hydrophobic polymer, the total content is preferably more than 40 mol% and less than 100 mol%, more preferably more than 40 mol% and 92.5 mol% or less, and particularly preferably 42 mol% or more and 85 mol% or less.

In a case where n in Formula (1-1) is 1 and the polymer is a hydrophilic polymer, the total content ratio of the structural unit (B-2) is preferably more than 0 mol parts, more preferably 2.5 mol parts or more, and particularly preferably 5 mol parts or more, relative to a total of 100 mol parts of the structural units (A-2) and (B-2). Furthermore, in a case where n in Formula (1-1) is 1 and the polymer is a hydrophilic polymer, the total content ratio is preferably less than 20 mol parts, more preferably 18.5 mol parts or less, and particularly preferably 17 mol parts or less, relative to a total of 100 mol parts of the structural units (A-2) and (B-2). As a specific range, in a case where n in Formula (1-1) is 1 and the polymer is a hydrophilic polymer, the total content ratio is preferably more than 0 mol parts and less than 20 mol parts, more preferably 2.5 mol parts or more and 18.5 mol parts or less, and particularly preferably 5 mol parts or more and 17 mol parts or less.

In a case where n in Formula (1-1) is 2 and the polymer is a hydrophilic polymer, the total content ratio of the structural unit (B-2) is preferably more than 0 mol parts, more preferably 2.5 mol parts or more, and particularly preferably 5 mol parts or more, relative to a total of 100 mol parts of the structural units (A-2) and (B-2). Furthermore, in a case where n in Formula (1-1) is 2 and the polymer is a hydrophilic polymer, the total content ratio is preferably less than 33.5 mol parts, and more preferably 33 mol parts or less, relative to a total of 100 mol parts of the structural units (A-2) and (B-2). As a specific range, in a case where n in Formula (1-1) is 2 and the polymer is a hydrophilic polymer, the total content ratio is preferably more than 0 mol parts and less than 33.5 mol parts, more preferably 2.5 mol parts or more and 33 mol parts or less, and particularly preferably 5 mol parts or more and 33 mol parts or less.

In a case where n in Formula (1-1) is 1 and the polymer is a temperature-responsive polymer, the total content ratio of the structural units (B-2) is preferably 20 mol parts or more, more preferably 21.5 mol parts or more, and particularly preferably 23 mol parts or more, relative to a total of 100 mol parts of the structural units (A-2) and (B-2). Furthermore, in a case where n in Formula (1-1) is 1 and a polymer is a temperature-responsive polymer, the total content ratio is preferably 29 mol parts or less, and particularly preferably 28 mol parts or less, relative to a total of 100 mol parts of the structural units (A-2) and (B-2). As a specific range, in a case where n in Formula (1-1) is 1 and the polymer is a temperature-responsive polymer, the total content ratio is preferably 20 mol parts or more and 29 mol parts or less, more preferably 21.5 mol parts or more and 29 mol parts or less, and particularly preferably 23 mol parts or more and 28 mol parts or less.

In a case where n in Formula (1-1) is 2 and the polymer is a temperature-responsive polymer, the total content ratio of the structural units (B-2) is preferably 33.5 mol parts or more, more preferably 34 mol parts or more, and particularly preferably 34.5 mol parts or more, relative to a total of 100 mol parts of the structural units (A-2) and (B-2). Furthermore, in a case where n in Formula (1-1) is 2 and a polymer is a temperature-responsive polymer, the total content ratio is preferably 40 mol parts or less, and particularly preferably 38 mol parts or less, relative to a total of 100 mol parts of the structural units (A-2) and (B-2). As a specific range, in a case where n in Formula (1-1) is 2 and the polymer is a temperature-responsive polymer, the total content ratio is preferably 33.5 mol parts or more and 40 mol parts or less, more preferably 34 mol parts or more and 40 mol parts or less, and particularly preferably 34.5 mol parts or more and 38 mol parts or less.

In a case where n in Formula (1-1) is 1 and the polymer is a hydrophobic polymer, the total content ratio of the structural unit (B-2) is preferably more than 29 mol parts, and particularly preferably 30 mol parts or more, relative to a total of 100 mol parts of the structural units (A-2) and (B-2). Furthermore, in a case where n in Formula (1-1) is 1 and the polymer is a hydrophobic polymer, the total content ratio is preferably less than 100 mol parts, more preferably 92.5 or less, and particularly preferably 85 mol parts or less, relative to a total of 100 mol parts of the structural units (A-2) and (B-2). As a specific range, in a case where n in Formula (1-1) is 1 and the polymer is a hydrophobic polymer, the total content ratio is preferably more than 29 mol parts and less than 100 mol parts, more preferably more than 29 mol parts and 92.5 mol parts or less, and particularly preferably 30 mol parts or more and 85 mol parts or less.

In a case where n in Formula (1-1) is 2 and the polymer is a hydrophobic polymer, the total content ratio of the structural unit (B-2) is preferably more than 40 mol parts, and particularly preferably 42 mol parts or more, relative to a total of 100 mol parts of the structural units (A-2) and (B-2). Furthermore, in a case where n in Formula (1-1) is 2 and the polymer is a hydrophobic polymer, the total content ratio is preferably less than 100 mol parts, more preferably 92.5 or less, and particularly preferably 85 mol parts or less, relative to a total of 100 mol parts of the structural units (A-2) and (B-2). As a specific range, in a case where n in Formula (1-1) is 2 and the polymer is a hydrophobic polymer, the total content ratio is preferably more than 40 mol parts and less than 100 mol parts, more preferably more than 40 mol parts and 92.5 mol parts or less, and particularly preferably 42 mol parts or more and 85 mol parts or less.

The content of each structural unit in the copolymer of the present invention can be measured by ¹H-NMR, for example.

The copolymer of the present invention may be any of a random copolymer, an alternating copolymer, and a block copolymer. However, a random copolymer is preferable. In addition, the copolymer of the present invention is preferably a non-crosslinked polymer.

The number average molecular weight (Mn) of the copolymer of the present invention is preferably 500 or more and 100,000 or less, and more preferably 1,000 or more and 50,000 or less.

In addition, the weight average molecular weight (Mw) of the copolymer of the present invention is preferably 1,000 or more and 200,000 or less, and more preferably 2,000 or more and 100,000 or less.

The molecular weight distribution (Mw/Mn) is preferably 1.01 or more and 4.00 or less, and more preferably 1.01 or more and 3.00 or less.

The number average molecular weight, the weight average molecular weight, and the molecular weight distribution may be measured according to the methods described in examples described later.

### [Method for Producing Copolymer]

The method for producing the present invention is a method for producing a copolymer, the method including a polymerization process of polymerizing the above monomer (A-1) and the above monomer (B-1)**.** According to the method for producing the present invention, it is possible to easily and efficiently produce a temperature-responsive polymer having low cytotoxicity and alkali degradability, a hydrophilic polymer having low cytotoxicity and alkali degradability, and a hydrophobic polymer having low cytotoxicity and alkali degradability.

The monomers (A-1) and (B-1) are the same as those used in the polymerizable composition. In addition, these monomers may be commercially available products or may be those obtained by synthesis according to a conventional method.

### (Polymerization Process)

From the viewpoint of reaction efficiency, the polymerization process is preferably performed in the presence of a radical polymerization initiator and/or a solvent, and more preferably performed in the presence of a radical polymerization initiator. A solvent may be used together with the radical polymerization initiator.

The meaning of various words, the amount of each component used, the ratio thereof, for example, in the method for producing the present invention are the same as the meaning of various words, the content of each component, the ratio thereof described for "the polymerizable composition of the present invention", for example.

The polymerization temperature in the polymerization process is usually 0 to 150°C. However, it is preferably 20 to 120°C from the viewpoint of reaction efficiency. The polymerization time is usually 30 minutes to 72 hours. However, it is preferably 1 hour to 60 hours from the viewpoint of reaction efficiency.

The reaction product obtained in the above process may be purified as necessary.

The copolymer of the present invention that can be produced as described above has any one of temperature responsiveness, hydrophilicity, and hydrophobicity, and has low cytotoxicity and alkali degradability.

Therefore, in a case where the copolymer of the present invention has temperature responsiveness, it is useful as a degradable plastic, a drug carrier, a biosensor, a temperature-responsive light control agent, or a material thereof, for example.

In addition, in a case where the copolymer of the present invention has hydrophilicity, it is useful as a degradable plastic, a drug carrier, a cosmetic additive, an emulsifier, or a material thereof.

In addition, in a case where the copolymer of the present invention has hydrophobicity, it is useful as a degradable plastic, a drug carrier, a separation membrane, a weather-resistant paint, or a material thereof.

### [Kit]

The kit of the present invention includes the polymerizable compositions (α-1), (β-1), and (γ-1), or includes the polymerizable compositions (α-2), (β-2), and (γ-2). The meaning of various words, the content of each component, the ratio thereof, for example, in the kit of the present invention are the same as the meaning of various words, the content of each component, the ratio thereof, described for "the polymerizable composition of the present invention", for example.

By using the polymerizable composition (α-1) or the polymerizable composition (α-2), a hydrophilic polymer having low cytotoxicity and alkali degradability can be easily and efficiently produced; by using the polymerizable composition (β-1) or the polymerizable composition (β-2), a temperature-responsive polymer having low cytotoxicity and alkali degradability can be easily and efficiently produced; and by using the polymerizable composition (γ-1) or the polymerizable composition (γ-2), a hydrophobic polymer having low cytotoxicity and alkali degradability can be easily and efficiently produced.

Therefore, by using the kit of the present invention, all of a temperature-responsive polymer having low cytotoxicity and alkali degradability, a hydrophilic polymer having low cytotoxicity and alkali degradability, and a hydrophobic polymer having low cytotoxicity and alkali degradability can be easily and efficiently produced.

### Examples

Hereinafter, the present invention will be described in more detail with reference to examples. However, the present invention is not limited only to these examples. In the following examples, each measurement method was performed according to the following method.
(1) The number average molecular weight Mn, the weight average molecular weight Mw, and the molecular weight distribution (Mw/Mn) were measured by gel filtration chromatography (GPC) in terms of polystyrene gel [RI detector, column: TSKgel column G-MHHR-M×2 (manufactured by Tosoh Corporation), eluent: N,N-dimethylformamide (containing 10 mmol/L lithium bromide), measurement temperature: 40°C, flow rate: 1.0 mL/min].
(2) The calculation of the monomer conversion rate and the structural analysis of the polymer were performed using ¹H NMR (JNM ECX-500II manufactured by JEOL Ltd.) (Solvent: deuterated water, deuterated chloroform or deuterated dimethyl sulfoxide).

### (Example 1 Radical Copolymerization of HEVE and MDO)

To a test tube, 0.193 g (2.19 mmol) of 2-hydroxyethyl vinyl ether (hereinafter, it is described as "HEVE"), 0.250 g (2.19 mmol) of 2-methylene-1,3-dioxepane (hereinafter, it is described as "MDO"), and 2.0 mg (8.76×10⁻⁶ mol) of dimethyl 2,2'-azobis (2-methylpropionate) (Trade name: V-601, FUJIFILM Wako Pure Chemical Corporation; hereinafter, referred to as "V-601") as a radical polymerization initiator were added and dissolved well (the molar ratio was HEVE/MDO=5.00/5.00; Total monomer/V-601=500/1). Next, a stirring bar was added to the test tube, and nitrogen was blown into the test tube in an ice bath to deoxidize the test tube. After completion of the deoxygenation, the test tube was sealed and subjected to radical copolymerization in an oil bath at 70°C.

In addition, the HEVE/MDO (molar ratio) was changed to 9.00/1.00, 8.00/2.00, 7.00/3.00, 6.00/4.00, 5.50/4.50, 5.25/4.75, 4.50/5.50, 4.00/6.00, 3.00/7.00, 2.00/8.00, and 1.00/9.00, and each radical copolymerization was performed by the same procedure.

After a lapse of 24 hours from the start of the reaction, air was blown into the test tube, N,N-dimethylformamide was added thereto, and dialysis purification was performed using a Spectra/Por 7 Dialysis Membrane (molecular weight cut-off =1000). Thereafter, lyophilization was performed.

In a case where the charged amount molar ratio of HEVE/MDO was 5.00/5.00, the molecular weight distribution (Mw/Mn) represented by the number average molecular weight Mn and the ratio of the weight average molecular weight to the number average molecular weight of the obtained copolymer was Mn=5700 and Mw/Mn=1.31. The Mn and Mw/Mn of the copolymers with other charging ratios are shown in Table 1.

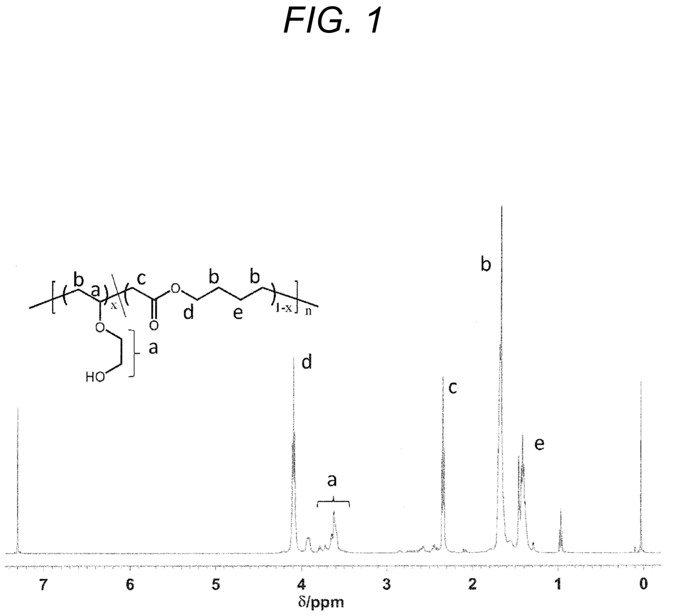

In addition, the structure was determined as in Formula (3) below by ¹H NMR. Fig. 1 illustrates the results of ¹H NMR [solvent: deuterated chloroform] of the copolymer obtained in Example 1.

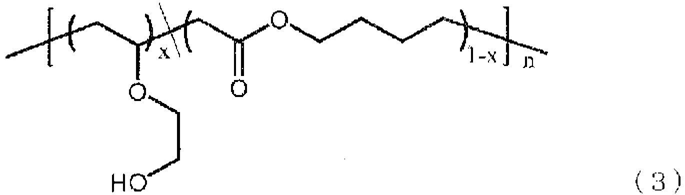

[In Formula (3), x and n represent the number of repetitions of each structural unit.]

### (Test Example 1 Evaluation of Water-Solubility of Radical Copolymer of HEVE and MDO)

Ultrapure water (manufactured by FUJIFILM Wako Pure Chemical Corporation) was added to the copolymer obtained in Example 1 to have a concentration of 1.0 mass%, and the mixture was stirred at 4°C for 1 day. Thereafter, the copolymer aqueous solution or copolymer dispersion was stirred at 200 rpm, and a change in transmittance of light having a wavelength of 500 nm was measured while the temperature was changed from 5°C to 85°C. For the measurement, an ultraviolet/visible spectrophotometer (Model V-650 manufactured by JASCO Corporation) was used.

At that time, a point at which the transmittance became 50% with respect to the temperature change was determined as the response temperature (°C). In addition, in a case where the transmittance did not become from more than 50% to 50% or less even if the temperature was changed, or in a case where the transmittance did not become from less than 50% to 50% or more even if the temperature was changed, it was determined that there was no response temperature. For the copolymer evaluated as having no response temperature, the average transmittance at a measurement temperature of 5°C to 85°C was calculated, and the copolymer having an average transmittance of 90% or more was determined to be hydrophilic, and the copolymer having an average transmittance of less than 10% or insoluble was determined to be hydrophobic. The response temperature (°C) and the average transmittance (%) are shown in Table 1**.**

### (Test Example 2 Evaluation of Alkali Degradability of Radical Copolymer of HEVE and MDO)

Ultrapure water (manufactured by FUJIFILM Wako Pure Chemical Corporation) was added to the copolymer obtained in Example 1 to have a concentration of 1.0 mass%, and the mixture was stirred at 4°C for 1 day. Thereafter, a 1.0 mol/L aqueous sodium hydroxide solution (manufactured by FUJIFILM Wako Pure Chemical Corporation) was added to the copolymer aqueous solution or copolymer dispersion to pH 13, and the mixture was stirred at room temperature for 3 days. During that time, GPC analysis was performed every 24 hours, the number average molecular weight was measured, and the decomposition of the copolymer was confirmed from the decrease in the molecular weight. A sample in which a decrease in the number average molecular weight was observed was rated as having alkali decomposability (evaluation: o). The results are shown in Table 1.

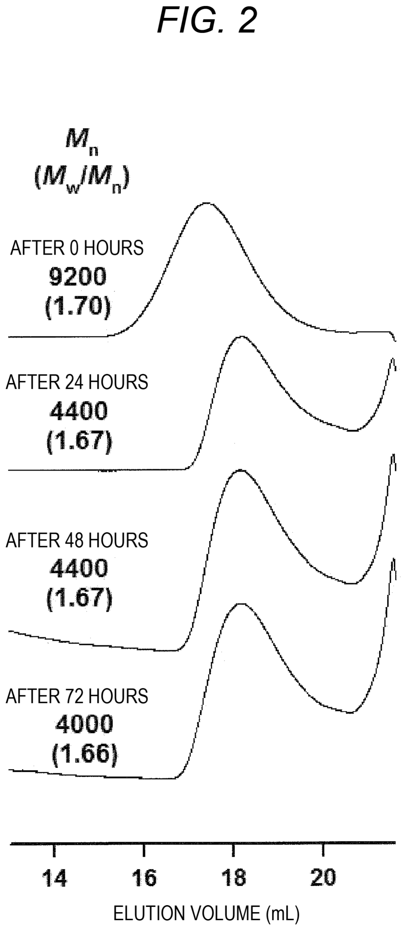

In addition, Fig. 2 illustrates a change in molecular weight of the copolymer (Sample 1-4) obtained at a charged amount molar ratio HEVE/MDO=7.00/3.00.

**[Table 1]**

| Sample | Charged amounts (Mol ratio) | | Conversion rate (%) | | Copolymer composition ratio (mol ratio) | | Mn | Mw/Mn | Response temperature (°C) | Average transmittance (%) | Degradability |
|---|---|---|---|---|---|---|---|---|---|---|---|
| | HEVE | MDO | HEVE | MDO | HEVE | MDO | | | | | |
| 1-2 | 9.00 | 1. 00 | 85 | 40 | 9.5 | 0.5 | 16000 | 2.05 | - | 100.0 (Hydrophilic) | ○ |
| 1-3 | 8.00 | 2.00 | 78 | 35 | 9.0 | 1.0 | 10100 | 2.19 | - | 99. 9 (Hydrophilic) | ○ |
| 1-4 | 7.00 | 3.00 | 76 | 26 | 8.7 | 1.3 | 9200 | 1.70 | - | 100.0 (Hydrophilic) | ○ |
| 1-5 | 6.00 | 4.00 | 79 | 24 | 8.3 | 1.7 | 7000 | 1.46 | - | 99.9 (Hydrophilic) | ○ |
| 1-6 | 5.50 | 4.50 | 84 | 31 | 7.7 | 2.3 | 5300 | 1.35 | 28.4 | - | ○ |
| 1-7 | 5.25 | 4.75 | 78 | 30 | 7.4 | 2.6 | 5300 | 1.30 | 18.0 | - | ○ |
| 1-1 | 5.00 | 5.00 | 76 | 28 | 7.3 | 2.7 | 5700 | 1.31 | 15.9 | - | ○ |
| 1-8 | 4.50 | 5.50 | 65 | 21 | 7.2 | 2.8 | 5200 | 1.30 | 14.2 | - | ○ |
| 1-9 | 4.00 | 6.00 | 20 | 6 | 7.0 | 3.0 | 6300 | 1.76 | - | 0.1 (Hydrophobic) | ○ |
| 1-10 | 3.00 | 7.00 | 13 | 4 | 5.8 | 4.2 | 6200 | 2.01 | - | 0.0 (Hydrophobic) | ○ |
| 1-11 | 2.00 | 8.00 | 11 | 2 | 5.6 | 4.4 | 5500 | 1.76 | - | 0.0 (Hydrophobic) | ○ |
| 1-12 | 1.00 | 9.00 | 17 | 9 | 1.7 | 8.3 | 5100 | 1.53 | - | 0.0 (Hydrophobic) | ○ |

| | | | | | | | | | | | |
|---|---|---|---|---|---|---|---|---|---|---|---|
| HEVE: 2-Hydroxyethyl vinyl ether MDO: 2-Methylene-1,3-dioxepane | | | | | | | | | | | |

As shown in Table 1, by using a polymerizable composition containing HEVE and MDO, a temperature-responsive polymer, a hydrophilic polymer, and a hydrophobic polymer can be easily produced separately. In addition, each of the separately produced polymers exhibited alkali degradability.

### (Test Example 3 Evaluation of Cytotoxicity of Radical Copolymers of HEVE and MDO)

Suspended mouse fibroblasts (NIH-3T3) were seeded in 100 µL of Dulbecco's Modified Eagle's Medium to which 10% fetal bovine serum was added, and cultured in the presence of an aqueous solution of the copolymer (charged amount molar ratio HEVE/MDO=7.00/3.00) obtained in Example 1. After incubation at 37°C for 24 hours, the cell viability (%) was determined from the absorbance at 450 nm using a cell count reagent SF (manufactured by NACALAI TESQUE, INC.).

The cell viability (%) was calculated at copolymer aqueous solution concentrations of 0.2 mg/mL, 0.4 mg/mL, 0.6 mg/mL, 0.8 mg/mL, and 1.0 mg/mL, respectively. The cell viability was 100% or more in all cases.

### (Example 2 Radical Copolymerization of DEGV and MDO and Water Solubility Thereof)

To a test tube, 0.232 g (1.75 mmol) of diethylene glycol monovinyl ether (hereinafter, it is described as "DEGV"), 0.300 g (2.63 mmol) of MDO, and 2.0 mg (8.76×10⁻⁶ mol) of V-601 were added and dissolved well (the molar ratio was DEGV/MDO=4/6; Total Monomers/V-601=500/1). Next, a stirring bar was added to the test tube, and nitrogen was blown into the test tube in an ice bath to deoxidize the test tube. After completion of the deoxygenation, the test tube was sealed and subjected to radical copolymerization in an oil bath at 70°C for 24 hours. As a result, a copolymer was obtained with a conversion rate of DEGV of 70% and a conversion rate of MDO of 21%, and the result of GPC analysis showed Mn=6600 and Mw/Mn=1.83.

In addition, the charged amount molar ratio DEGV/MDO was changed to 6/4, 4.5/5.5, 3.5/6.5, and 2/8, and radical copolymerization was performed by the same procedure to obtain a radical copolymer of DEGV and MDO.

These five DEGV and MDO copolymers were evaluated for water solubility in the same manner as in Test Example 1. The results are shown in Table 2.

**[Table 2]**

| Sample | Charged amounts (Mol ratio) | | Copolymer composition ratio (mol ratio) | | Response temperature (°C) | Average transmittance (%) |
|---|---|---|---|---|---|---|
| | DEGV | MDO | DEGV | MDO | | |
| 2-2 | 6 | 4 | 7.5 | 2.5 | - | 100.0 (Hydrophilic) |
| 2-3 | 4.5 | 5.5 | 6.7 | 3.3 | - | 99.9 (Hydrophilic) |
| 2-1 | 4 | 6 | 6.5 | 3.5 | 68.9 | - |
| 2-4 | 3.5 | 6.5 | 6.3 | 3.7 | 24.3 | - |
| 2-5 | 2 | 8 | 5.8 | 4.2 | - | 0.0 (Hydrophobic) |

| | | | | | | |
|---|---|---|---|---|---|---|
| DEGV: Diethylene glycol monovinyl ether MDO: 2-Methylene-1,3-dioxepane | | | | | | |

As shown in Table 2, by using a polymerizable composition containing DEGV and MDO, a temperature-responsive polymer, a hydrophilic polymer, and a hydrophobic polymer can be easily produced separately.

### (Comparative Example 1 Radical Copolymerization of TEGMVE and MDO and Water Solubility Thereof)

To a test tube, 0.821 g (3.504 mmol) of tetraethylene glycol methyl vinyl ether (hereinafter, it is described as "TEGMVE"), 0.100 g (0.876 mmol) of MDO and 2.0 mg (8.76×10⁻⁶ mol) of V-601 were added and dissolved well (molar ratio: TEGMVE/MDO=8/2). Next, a stirring bar was added to the test tube, and nitrogen was blown into the test tube in an ice bath to deoxidize the test tube. After completion of the deoxygenation, the test tube was sealed and subjected to radical copolymerization in an oil bath at 70°C for 24 hours. As a result, the copolymer was obtained with a conversion rate of TEGMVE of 59% and a conversion rate of MDO of 21%, and the GPC analysis result showed Mn=9900 and Mw/Mn=2.22.

In addition, by changing the charged amount molar ratio of TEGMVE/MDO to the molar ratios shown in Table 3, radical copolymerization was carried out in the same manner to obtain radical copolymers of TEGMVE and MDO. Further, evaluation of water solubility was performed in the same manner as in Test Example 1. The results are shown in Table 3.

**[Table 3]**

| Sample | Charged amounts (Mol ratio) | | Response temperature (°C) | Average transmittance (%) |
|---|---|---|---|---|
| | TEGMVE | MDO | | |
| 3-1 | 8 | 2 | - | 10> (Hydrophobic) |
| 3-2 | 2 | 8 | - | 10> (Hydrophobic) |

| | | | | |
|---|---|---|---|---|
| TEGMVE: Tetraethylene glycol methyl vinyl ether MDO: 2-Methylene-1,3-dioxepane | | | | |

For the combination of TEGMVE and MDO, a copolymer exhibiting temperature responsiveness was not obtained even when the molar ratio was changed.

### (Reference Example 1 HEVE Homopolymer and MDO Homopolymer and Water Solubility thereof)

To a test tube, 0.386 g (4.38 mmol) of HEVE and 2.0 mg (8.76×10⁻⁶ mol) of V-601 was added and dissolved well. Next, a stirring bar was added to the test tube, and nitrogen was blown into the test tube in an ice bath to deoxidize the test tube. After the completion of deoxygenation, the test tube is sealed, and radical polymerization is performed in an oil bath at 70°C.

Furthermore, to the test tube, 0.500 g (4.38 mmol) of MDO and 2.0 mg (8.76×10⁻⁶ mol) of V-601 are added and dissolved well. Next, a stirring bar was added to the test tube, and nitrogen was blown into the test tube in an ice bath to deoxidize the test tube. After the completion of deoxygenation, the test tube is sealed, and radical polymerization is performed in an oil bath at 70°C.

The obtained HEVE homopolymer is hydrophilic, and the MDO homopolymer is hydrophobic, and neither exhibits temperature responsiveness.

## Claims

1. A polymerizable composition comprising the following monomers (A-1) and (B-1), wherein
(A-1) is a monomer represented by Formula (1-1), and
(B-1) is a monomer represented by Formula (2-1) 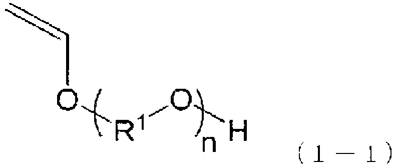 wherein
R¹ represents an alkanediyl group having 1 to 5 carbon atoms, and
n represents an integer of 1 to 10, 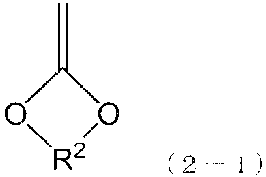
wherein R² represents a linear alkanediyl group having 1 to 5 carbon atoms.

2. The polymerizable composition according to claim 1, wherein the monomer represented by Formula (2-1) is 2-methylene-1,3-dioxepane.

3. The polymerizable composition according to claim 1 or 2, wherein R¹ is an alkanediyl group having 2 or 3 carbon atoms, and n is an integer of 1 to 4.

4. The polymerizable composition according to claim 3, wherein n is 1.

5. A copolymer comprising: the following structural units (A-2) and (B-2), wherein
(A-2) is a structural unit represented by Formula (1-2), and
(B-2) is a structural unit represented by Formula (2-2) 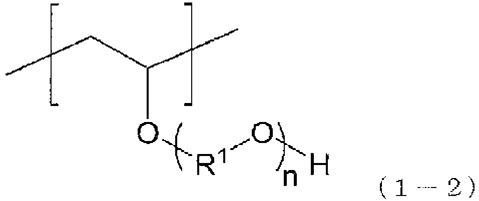 wherein
R¹ represents an alkanediyl group having 1 to 5 carbon atoms, and
n represents an integer of 1 to 10, 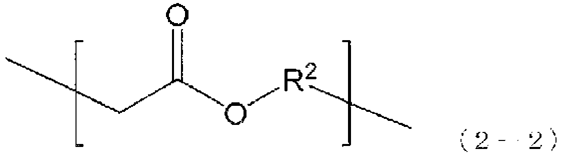
wherein R² represents a linear alkanediyl group having 1 to 5 carbon atoms.

6. A method for producing a copolymer, the method comprising: a polymerization process of polymerizing the following monomer (A-1) and the following monomer (B-1), wherein
(A-1) is a monomer represented by Formula (1-1), and
(B-1) is a monomer represented by Formula (2-1). 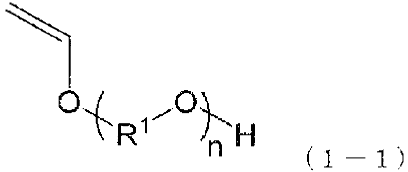 wherein
R¹ represents an alkanediyl group having 1 to 5 carbon atoms, and
n represents an integer of 1 to 10, 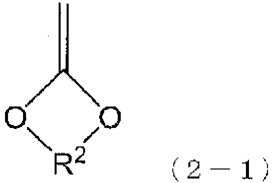
wherein R² represents a linear alkanediyl group having 1 to 5 carbon atoms.

7. A kit for producing a copolymer, the kit comprising:
the following polymerizable compositions (α-1), (β-1), and (γ-1), wherein
(α-1) is a polymerizable composition containing a monomer represented by Formula (1-1), in an amount of more than 58 mol parts and less than 100 mol parts relative to a total of 100 mol parts of the monomer represented by Formula (1-1) and the monomer represented by Formula (2-1), and a monomer represented by Formula (2-1), in an amount of more than 0 mol parts and less than 42 mol parts relative to a total of 100 mol parts of the monomer represented by Formula (1-1) and the monomer represented by Formula (2-1),
(β-1) is a polymerizable composition containing a monomer represented by Formula (1-1), in an amount of 43 mol parts or more and 58 mol parts or less relative to a total of 100 mol parts of the monomer represented by Formula (1-1) and the monomer represented by Formula (2-1), and a monomer represented by Formula (2-1), in an amount of 42 mol parts or more and 57 mol parts or less relative to a total of 100 mol parts of the monomer represented by Formula (1-1) and the monomer represented by Formula (2-1), and
(γ-1) is a polymerizable composition containing a monomer represented by Formula (1-1), in an amount of more than 0 mol parts and less than 43 mol parts relative to a total of 100 mol parts of the monomer represented by Formula (1-1) and the monomer represented by Formula (2-1), and a monomer represented by Formula (2-1), in an amount of more than 57 mol parts and less than 100 mol parts relative to a total of 100 mol parts of the monomer represented by Formula (1-1) and the monomer represented by Formula (2-1) 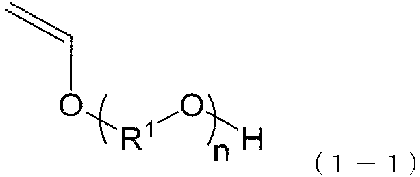 wherein
R¹ represents an alkanediyl group having 1 to 5 carbon atoms, and
n represents 1, 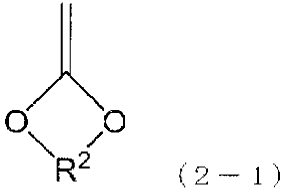
wherein R² represents a linear alkanediyl group having 1 to 5 carbon atoms.

8. A kit for producing a copolymer, the kit comprising: the following polymerizable compositions (α-2), (β-2), and (γ-2), wherein
(α-2) is a polymerizable composition containing a monomer represented by Formula (1-1), in an amount of more than 43 mol parts and less than 100 mol parts relative to a total of 100 mol parts of the monomer represented by Formula (1-1) and the monomer represented by Formula (2-1), and a monomer represented by Formula (2-1), in an amount of more than 0 mol parts and less than 57 mol parts relative to a total of 100 mol parts of the monomer represented by Formula (1-1) and the monomer represented by Formula (2-1),
(β-2) is a polymerizable composition containing a monomer represented by Formula (1-1), in an amount of 28 mol parts or more and 43 mol parts or less relative to a total of 100 mol parts of the monomer represented by Formula (1-1) and the monomer represented by Formula (2-1), and a monomer represented by Formula (2-1), in an amount of 57 mol parts or more and 72 mol parts or less relative to a total of 100 mol parts of the monomer represented by Formula (1-1) and the monomer represented by Formula (2-1), and
(γ-2) is a polymerizable composition containing a monomer represented by Formula (1-1), in an amount of more than 0 mol parts and less than 28 mol parts relative to a total of 100 mol parts of the monomer represented by Formula (1-1) and the monomer represented by Formula (2-1), and a monomer represented by Formula (2-1), in an amount of more than 72 mol parts and less than 100 mol parts relative to a total of 100 mol parts of the monomer represented by Formula (1-1) and the monomer represented by Formula (2-1), 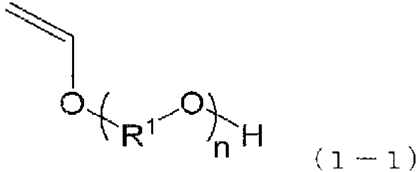 wherein
R¹ represents an alkanediyl group having 1 to 5 carbon atoms, and
n represents 2, 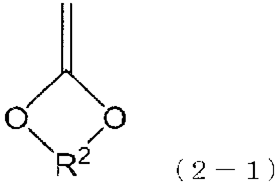
wherein R² represents a linear alkanediyl group having 1 to 5 carbon atoms.
